(19) Europäisches Patentamt / European Patent Office / Office européen des brevets

(11) **EP 1 738 991 B1**

## (12) FASCICULE DE BREVET EUROPEEN

(45) Date de publication et mention de la délivrance du brevet:
**31.12.2008 Bulletin 2009/01**

(51) Int Cl.:
**B62D 7/15** *(2006.01)* **B62D 6/04** *(2006.01)*
**B62D 6/00** *(2006.01)*

(21) Numéro de dépôt: **06300396.6**

(22) Date de dépôt: **24.04.2006**

(54) **Système et procédé de commande de braquage des roues arrières d'un véhicule automobile à quatre roues directrices**

System und Verfahren zur Ansteueren des Einschlagens der Hinterräder eines Fahrzeuges mit Vierradlenkung

System and method to control the steering of the rear wheels of a motor vehicle with four-wheel steering

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.06.2005 FR 0506725**

(43) Date de publication de la demande:
**03.01.2007 Bulletin 2007/01**

(73) Titulaire: **RENAULT S.A.S.**
**92100 Boulogne Billancourt (FR)**

(72) Inventeurs:
• **Guegan, Stéphane**
 **78000 Versailles (FR)**
• **Le Vourch, Yves**
 **78150 Le Chesnay (FR)**
• **Pothin, Richard**
 **78760 Jouars Ponchartrain (FR)**

(56) Documents cités:
**EP-A- 0 470 630 US-A- 4 947 326**
**US-A- 5 238 078 US-A- 5 251 135**
**US-A- 5 267 160**

**Description**

La présente invention concerne les véhicules automobiles à quatre roues directrices, et plus particulièrement la commande de braquage des roues arrière directrices.

De façon classique, les véhicules automobiles sont pourvus d'un châssis, d'un habitacle, et de roues reliées au châssis par un mécanisme de suspension avec des roues avant directrices commandées par un volant à la disposition du conducteur dans l'habitacle du véhicule. Les véhicules à quatre roues directrices possèdent, en outre, des roues arrière directrices commandées par un mécanisme adapté.

Le document US4947326 décrit un système aussi bien que une procède de commande de braquage de roues arrière directrices embarqué à bord d'un véhicule automobile à quatre roues directrices, dans lequel la consigne de braquage des roues arrière est élaborée à partir de la vitesse du véhicule, de l'angle de braquage des roues avant du véhicule et du rapport de la vitesse de lacet et de la position angulaire du volant.

Le document GB 2 252 538 A (Honda) décrit un pilotage de roues arrière d'un véhicule automobile à quatre roues directrices pour obtenir une bonne et douce réaction en lacet pour une large gamme d'accélération. On détecte l'accélération latérale du véhicule et l'angle de braquage des roues avant, et on détermine un rapport final de l'angle de braquage des roues arrière sur l'angle de braquage des roues avant en fonction de l'accélération latérale. On détermine un angle cible de braquage des roues arrière à partir de ce rapport final, et on tourne les roues arrière pour atteindre cet angle cible. On détermine le ratio final de manière à ce que le gain éphémère d'amplitude du mouvement de lacet soit positif tant que l'accélération latérale est inférieure à une valeur prédéterminée.

Un tel pilotage de roues arrière est complexe, et agit sur la vitesse de lacet pour une position angulaire du volant donnée. Ce pilotage n'est valable que pour des valeurs de vitesses de lacet limitées dépendant de la position angulaire du volant.

L'invention propose de remédier à ces inconvénients et propose un système et un procédé de commande évolués, permettant d'améliorer le comportement du véhicule et par conséquent la sécurité du conducteur et le confort de conduite.

Aussi, il est proposé, selon un aspect de l'invention, un système de commande de braquage de roues arrière directrices embarqué à bord d'un véhicule automobile à quatre roues directrices. Le système comprend des moyens d'élaboration pour élaborer une consigne de braquage des roues arrière, réduisant le déphasage entre l'accélération latérale du véhicule et la vitesse de lacet du véhicule, en fonction de :

- la vitesse longitudinale du véhicule ;
- l'angle de braquage des roues avant du véhicule ; et
- le gain statique de la vitesse de lacet par rapport à la position angulaire du volant.

Le système permet de réduire le déphasage entre l'accélération latérale et la vitesse de lacet du véhicule, ce qui améliore le comportement du véhicule, et augmente le plaisir de conduite.

En outre, le système n'est pas obligé d'être muni d'un capteur de vitesse de lacet ou d'accélération latérale.

Le déphasage entre l'accélération latérale et la vitesse de lacet du véhicule est réglé sans impact sur le réglage du niveau statique de la vitesse de lacet, c'est-à-dire lorsque le comportement du véhicule est stabilisé et non transitoire.

Avantageusement, le système comprend des moyens de commande pour activer ou désactiver lesdits moyens d'élaboration.

Les moyens d'élaborations de la consigne sont commandés, et peuvent ainsi être activés ou désactivés.

Dans un mode de réalisation préféré, les moyens de commande sont adaptés pour activer les moyens d'élaboration lorsque au moins un premier paramètre de fonctionnement du véhicule vérifie une condition de seuil respective.

En d'autres termes les moyens d'élaborations sont activés par les moyens de commande lorsque le ou les premiers paramètres d'un ensemble d'au moins un premier paramètre de fonctionnement du véhicule vérifient chacun une condition de seuil respective, par exemple sur la vitesse longitudinale du véhicule ou la position angulaire du volant.

Dans un mode de réalisation avantageux, le ou les premiers paramètres comprennent la vitesse longitudinale du véhicule et/ou la position angulaire du volant.

Dans un mode de réalisation préféré, le gain statique de la vitesse de lacet par rapport à la position angulaire du volant varie en outre en fonction d'au moins un deuxième paramètre de fonctionnement du véhicule.

Par exemple, ledit ou lesdits deuxièmes paramètres de fonctionnement du véhicule comprennent la vitesse longitudinale du véhicule et/ou la position angulaire du volant.

En outre, les moyens d'élaboration peuvent être adaptés pour élaborer la consigne de braquage des roues arrière en outre en fonction de l'accélération de lacet du véhicule.

En outre, les moyens d'élaboration peuvent être adaptés pour élaborer la consigne de braquage des roues arrière en outre en fonction de la vitesse de lacet du véhicule.

Selon un autre aspect de l'invention, il est également proposé un procédé de commande de braquage de roues arrière directrices embarqué à bord d'un véhicule automobile à quatre roues directrices. On élabore une consigne de braquage des roues arrière, réduisant le déphasage entre l'accélération latérale du véhicule et la vitesse de lacet du véhicule, en fonction de :

- la vitesse longitudinale du véhicule ;
- l'angle de braquage des roues avant du véhicule ; et
- le gain statique de la vitesse de lacet par rapport à la position angulaire du volant.

Avantageusement, on active ladite élaboration de consigne de braquage des roues arrière lorsque au moins un premier paramètre de fonctionnement du véhicule vérifie une condition de seuil respective.

D'autres buts, caractéristiques et avantages de l'invention apparaîtront à la lecture de la description suivante, de quelques exemples nullement limitatifs, et faite en référence aux dessins annexés sur lesquels :

la figure 1 est un schéma synoptique du véhicule ;
la figure 2 est un schéma synoptique d'un mode de réalisation d'un module d'élaboration de consigne de braquage de roues arrière directrices, selon un aspect de l'invention ;
la figure 3 illustre le déphasage entre la vitesse de lacet et l'accélération latérale d'un véhicule à deux roues directrices ;
la figure 4 illustre l'amélioration de la phase lorsque le coefficient de retour dynamique $K_2$ diminue; et
le figure 5 illustre le coefficient de retour dynamique $K_2$ négatif supérieur ou égal à 0,6 $K_{2,max}$.

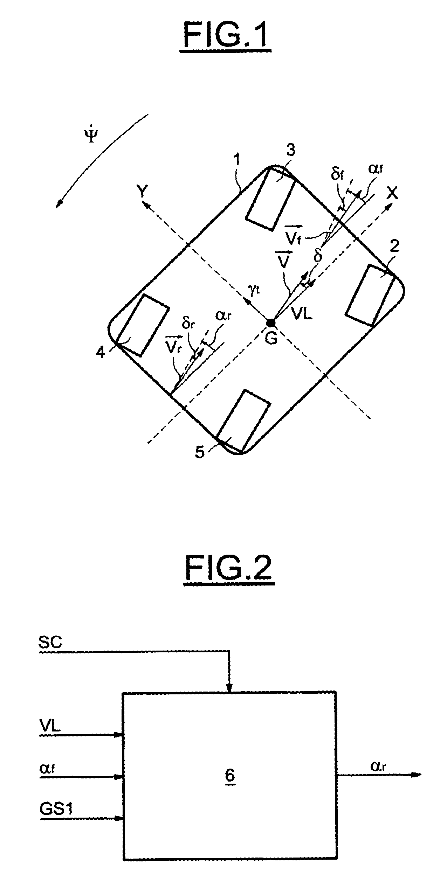

Sur la figure 1, est représenté schématiquement un véhicule 1 à quatre roues directrices 2, 3, 4 et 5. Les roues avant sont référencées 2 et 3, et les roues arrière référencées 4 et 5. Les roues avant 2 et 3, respectivement roues arrière 4 et 5 sont reliées entre-elles par un essieu ou train avant, respectivement arrière. On a également représenté le centre de gravité G du véhicule 1. Les axes longitudinal et transversal X et Y du véhicule 1 passant par le centre de gravité G sont également représentés en pointillés.

On note $\dot{\psi}$ la vitesse de lacet du véhicule 1. Les angles $\alpha_f$ et $\alpha_r$ de braquage des roues, respectivement avant et arrière, avec l'axe longitudinal du véhicule 1, sont également représentés.

La vitesse longitudinale VL du véhicule ainsi que l'accélération transversale $\gamma_t$ du véhicule sont également indiquées sur la figure 1.

Le véhicule 1 est, bien sur, équipé d'une unité de commande électronique, non représentée sur la figure 1.

Les vecteurs vitesses avant $\vec{V}_f$ et arrière $\vec{V}_r$ respectivement des trains avant et arrière sont également représentés.

On définit l'angle de dérive avant $\delta_f$ , respectivement arrière $\delta_r$ , comme l'angle entre le vecteur vitesse $\vec{V}_f$ du train avant et la direction de braquage des roues avant correspondant à un angle $\alpha_f$, respectivement l'angle entre le vecteur vitesse $\vec{V}_r$ du train arrière et la direction de braquage des roues arrière correspondant à un angle $\alpha_r$.

Sur la figure 2, est illustré un mode de réalisation d'un module d'élaboration 6 de consigne de braquage $\alpha_r$ des roues arrière directrices d'un véhicule selon la figure 1.

Le module d'élaboration 6 élabore une consigne de braquage des roues arrière $\alpha_r$, permettant de réduire le déphasage entre l'accélération latérale $\gamma_t$ du véhicule 1, et la vitesse de lacet $\dot{\psi}$ du véhicule 1.

Le module d'élaboration 6 reçoit en entrée la vitesse longitudinale VL du véhicule, l'angle de braquage $\alpha_f$ des roues avant du véhicule 1, et le gain statique GS1 de la vitesse de lacet $\dot{\psi}$ par rapport à la position angulaire du volant. En outre, un signal de commande SC permet d'activer ou de désactiver le module d'élaboration 6.

Par exemple, le signal de commande SC transmet une instruction d'activation du système lorsque la vitesse du véhicule dépasse un premier seuil, et/ou lorsque la position angulaire du volant dépasse un deuxième seuil.

Le signal de commande SC peut, en outre, transmettre une instruction de désactivation du système lorsque la vitesse du véhicule passe sous un troisième seuil, et/ou lorsque la position angulaire du volant passe sous un quatrième seuil.

La consigne de braquage $\alpha_r$ est fournie à un système de pilotage des roues arrière directrices du véhicule 1.

Le module d'élaboration 6 calcule la consigne de braquage $\alpha_r$ des roues arrière du véhicule 1 à partir de la relation :

$$\alpha_r = K_1 * \alpha_f + K_2 * \ddot{\psi} \qquad avec\ K_1 = 1 - GS1 \qquad (1)$$

dans laquelle :

$K_1$      est un coefficient statique entre les angles de braquage des roues arrière et avant du véhicule, en s ;

$K_2$      est un coefficient transitoire de retour en accélération de lacet, en $s^2$ ;

$\alpha_f$      est l'angle de braquage des roues avant avec l'axe longitudinal X du véhicule 1, en rad ; et

$\alpha_r$      est l'angle de braquage des roues arrière avec l'axe longitudinal X du véhicule, en rad.

On écrit une fonction de transfert de la vitesse de lacet $\dot{\psi}$ en fonction de l'accélération latérale ou transversale $\gamma_t$ du véhicule 1 :

$$\dot{\psi} = \frac{N_1}{D_1}\gamma_t \qquad (2)$$

avec :

$$D_1 = \left( I_z\left( 1 + K_1\frac{D_r}{D_f} \right) + K_2 l D_r \right)s^2 + l D_r\left( \frac{l_r + K_1 l_f}{VL} \right)s + l D_r(1 - K_1) \qquad (3)$$

et

$$N_1 = \frac{l D_r}{VL}(1 - K_1) + M\left( l_f - K_1\frac{D_r}{D_f}l_r \right)s \qquad (4)$$

dans lesquelles :

M      représente la masse totale du véhicule, en kg ;

$I_z$      représente l'inertie du véhicule autour de l'axe vertical en son centre de gravité G, en Nm ;

$l_f$      est la distance du centre de gravité G à l'essieu avant, en m ;

$l_r$      est la distance du centre de gravité G à l'essieu arrière, en m ;

l      est l'empattement du véhicule, en m ;

$D_f$      représente la rigidité de dérive avant, en N/rad ;

$D_r$      représente la rigidité de dérive arrière, en N/rad ;

VL      est la vitesse longitudinale du véhicule, en m/s ;

$\dot{\psi}$      est la vitesse de lacet du véhicule, en rad/s ;

$\ddot{\psi}$      est l'accélération de lacet du véhicule, en $rad/s^2$ ;

$\gamma_t$      est l'accélération latérale ou transversale du véhicule, mesurée au centre de gravité G, en $m/s^2$ ; et

$\delta$      est l'angle entre le vecteur vitesse $\vec{V}$ du véhicule et l'axe longitudinal du véhicule, en rad.

La rigidité de dérive avant $D_f$, respectivement arrière $D_r$, est définie par le coefficient de proportionnalité entre la poussée latérale exercée sur le sol par un pneu avant et l'angle de dérive avant $\delta_f$, respectivement par le coefficient de proportionnalité entre la poussée latérale exercée sur le sol par un pneu arrière et l'angle de dérive arrière $\delta_r$.

La phase du dénominateur $D_1$ de la fonction de transfert est une fonction croissante du coefficient $K_2$, tandis que la phase du numérateur $N_1$ de la fonction de transfert est indépendante de $K_2$.

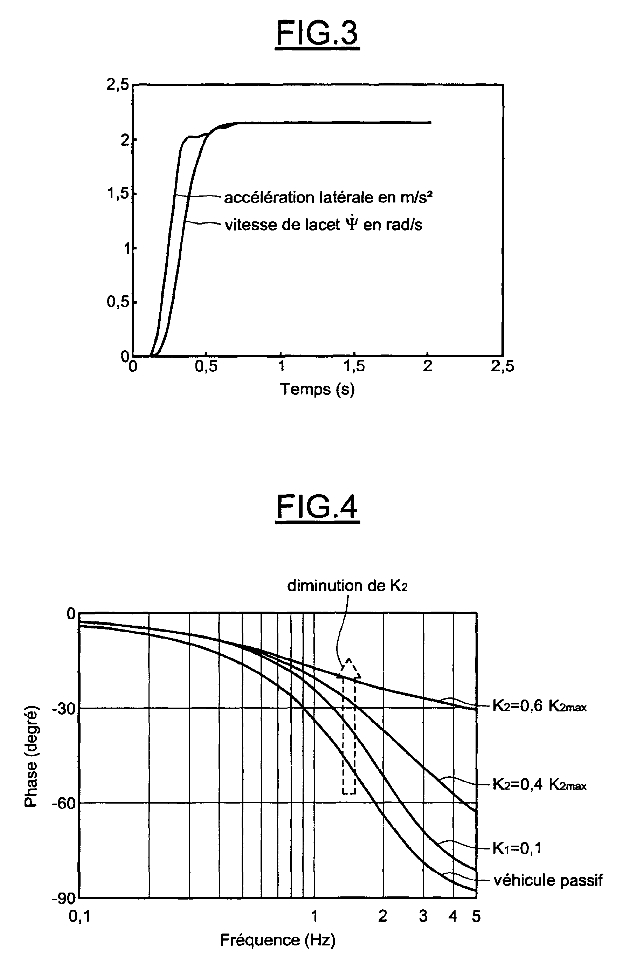

Un réglage de $K_2$ négatif permet de réduire le déphasage entre l'accélération latérale $\gamma_t$ du véhicule 1 et la vitesse de lacet $\dot{\psi}$ du véhicule 1, comme cela est illustré sur les diagrammes de Bode pour différentes valeurs de $K_2$ sur la figure 4. A titre de comparaison, la figure 3 illustre le déphasage entre la vitesse de lacet $\dot{\psi}$ et l'accélération latérale $\gamma_t$ d'un véhicule à deux roues directrices, pour lequel ce déphasage dépend de paramètres provenant de la structure générale du véhicule, et non modifiables.

Afin que le système demeure stable, il est nécessaire que la condition suivante soit respectée :

$$K_2 > \frac{-I_z\left(1 + K_1 \dfrac{D_r}{D_f}\right)}{lD_r} = K_{2\,max} \qquad (5)$$

On a alors pour relation entre l'angle de braquage des roues avant $\alpha_f$ et l'accélération latérale $\gamma_t$ du véhicule 1 :

$$\gamma_t = \frac{VL(I_z(D_f + K_1 D_r) + K_2 lD_r D_f)s^2 + lD_r D_f(I_r + K_1 l_f)s + lD_r D_f VL(1 - K_1)}{MVL(I_z + K_2 l_r D_r)s^2 + ((D_r + D_f)I_z + M(D_r l_r^2 + D_f l_f^2) + K_2 lD_r D_f)s + \dfrac{D_r D_f}{VL}l^2 - MVL(D_f l_f - D_r l_r)}\, \alpha_f$$

$$(6)$$

que l'on peut écrire sous la forme :

$$\gamma_t = K\alpha_f + \frac{K_N(s + z_n)}{D_2}\alpha_f \qquad (7)$$

dans laquelle :

K et $K_N$ sont des constantes,
$Z_N$ est la racine ou zéro de la fonction de transfert entre l'angle de braquage des roues avant $\alpha_f$ et l'accélération latérale $\gamma_t$ du véhicule 1, et
$D_2$ est le dénominateur de la fonction de transfert, soit :

$$D_2 = MV(I_z + K_2 l_r D_r)s^2 + ((D_r + D_f)I_z + M(D_r l_r^2 + D_f l_f^2) + K_2 lD_r D_f)s + \frac{D_r D_f}{V}l^2 - MV(D_f l_f - D_r l_r)$$

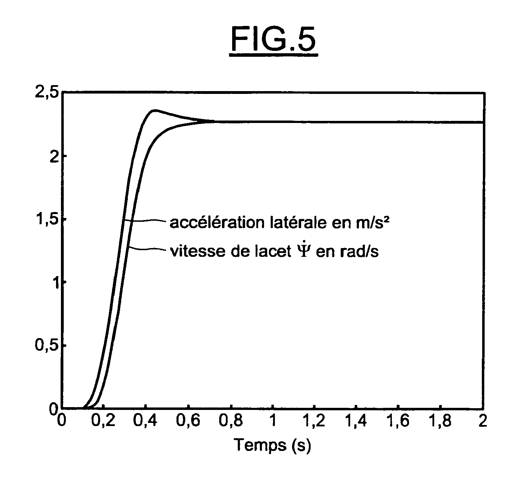

L'étude de la variation de la racine au zéro $Z_N$ et de la pulsation naturelle $\omega_N$ de l'accélération latérale ou transversale $\gamma_t$ permet de déterminer une valeur minimale à $K_2$, au-dessous de laquelle un dépassement unitaire peut arriver, comme cela est représenté sur la figure 5. Cette valeur minimale est égale à $0,6 \times K_{2,max}$. On entend par dépassement unitaire un dépassement important et unique de la valeur finale stabilisée.

L'accélération de lacet $\ddot{\psi}$ est calculée à partir des équations suivantes :

$$M\gamma_t = F_f + F_r \qquad (9)$$

$$I_z \ddot{\psi} = F_f l_f - F_r l_r \qquad (10)$$

$$VL(\alpha_f + \delta_f) = VL.\delta + \dot{\psi} l_r \qquad (11)$$

$$VL(\alpha_r + \delta_r) = VL.\delta - \dot{\psi} l_r \qquad (12)$$

$$\gamma_t = VL(\dot{\psi} + \dot{\delta}) \qquad (13)$$

$$F_f = -D_f \delta_f \qquad (14)$$

$$F_r = -D_r \delta_r \qquad (15)$$

Dans lesquelles :

$F_f$ représente l'effort latéral appliqué par le sol sur le train avant, en N ;
$F_r$ représente l'effort latéral appliqué par le sol sur le train arrière, en N ;
$\delta_f$ représente l'angle de dérive avant du train avant, en rad ; et
$\delta_r$ représente l'angle de dérive avant du train arrière, en rad.

Le coefficient $K_2$ est calculé au moyen de l'équation suivante :

$$K_2 = \frac{-I_z \left( 1 + (1 - GS1) \dfrac{D_r}{D_f} \right)}{ID_r} * REGLAGE \qquad (16)$$

dans laquelle le paramètre de réglage : REGLAGE peut être ajusté en fonction de la vitesse longitudinale VL du véhicule 1.
La consigne de braquage $\alpha_r$ des roues arrière est alors calculée au moyen de l'équation 1.
Par exemple, pour des vitesses de l'ordre de 50 km/h, une valeur du paramètre réglage est de l'ordre de 0,4.
En variante, la consigne de braquage $\alpha_r$ des roues arrière du véhicule 1 peut être calculée directement à partir de l'accélération de lacet $\ddot{\psi}$ du véhicule 1. En effet, l'accélération de lacet $\ddot{\psi}$ peut être évaluée à partir de deux accéléromètres mesurant l'accélération latérale ou transversale $\gamma_t$ du véhicule 1 qui seront placés en deux points suffisamment éloignés l'un de l'autre sur l'axe longitudinal X du véhicule 1.
En variante, la vitesse de lacet $\dot{\psi}$ fournie par un capteur de vitesse de lacet peut être dérivée et filtrée pour obtenir l'accélération de lacet $\ddot{\psi}$ du véhicule 1.
L'invention permet de réduire le déphasage entre l'accélération latérale et la vitesse de lacet du véhicule, ce qui améliore le comportement du véhicule, et augmente le plaisir de conduite.

**Revendications**

1. Système de commande de braquage de roues arrière directrices embarqué à bord d'un véhicule automobile (1) à quatre roues directrices (2,3,4,5), **caractérisé en ce qu'**il comprend des moyens d'élaboration (6) pour élaborer une consigne de braquage ($\alpha_r$) des roues arrière (4,5), réduisant le déphasage entre l'accélération latérale ($\gamma_t$) du véhicule (1) et la vitesse de lacet ($\dot{\psi}$) du véhicule (1), en fonction de :

   - la vitesse longitudinale (VL) du véhicule (1) ;
   - l'angle ($\alpha_r$) de braquage des roues avant (2,3) du véhicule (1) ; et
   - le gain statique (GS1) de la vitesse de lacet ($\psi$) par rapport à la position angulaire du volant.

2. Système selon la revendication 1, comprenant des moyens de commande (SC) pour activer ou désactiver lesdits moyens d'élaboration (6).

3. Système selon la revendication 2, dans lequel lesdits moyens de commande (SC) sont adaptés pour activer lesdits moyens d'élaboration (6) lorsque au moins un premier paramètre de fonctionnement du véhicule (1) vérifie une condition de seuil respective.

4. Système selon la revendication 3, dans lequel ledit ou lesdits premiers paramètres comprennent la vitesse longitudinale (VL) du véhicule et/ou la position angulaire du volant.

**5.** Système selon l'une quelconque des revendications précédentes, dans lequel ledit gain statique (GS1) de la vitesse de lacet ($\psi$) par rapport à la position angulaire du volant varie en outre en fonction d'au moins un deuxième paramètre de fonctionnement du véhicule (1).

**6.** Système selon la revendication 5, dans lequel ledit ou lesdits deuxièmes paramètres de fonctionnement du véhicule (1) comprennent la vitesse longitudinale (VL) du véhicule (1) et/ou la position angulaire du volant.

**7.** Système selon la revendication 1, dans lequel les moyens d'élaboration (6) sont adaptés pour élaborer la consigne de braquage ($\alpha_r$) des roues arrière (4,5) en outre en fonction de l'accélération de lacet $(\ddot{\psi})$ du véhicule (1).

**8.** Système selon la revendication 1, dans lequel les moyens d'élaboration (6) sont adaptés pour élaborer la consigne de braquage ($\alpha_r$) des roues arrière (4,5) en outre en fonction de la vitesse de lacet ($\dot{\psi}$) du véhicule.

**9.** Procédé de commande de braquage de roues arrière directrices embarqué à bord d'un véhicule automobile (1) à quatre roues directrices (2,3,4,5), **caractérisé en ce que** l'on élabore une consigne de braquage ($\alpha_r$) des roues arrière (4,5), réduisant le déphasage entre l'accélération latérale ($\gamma_t$) du véhicule et la vitesse de lacet ($\dot{\Psi}$) du véhicule, en fonction de :

- la vitesse longitudinale (VL) du véhicule ;
- l'angle ($\alpha_f$) de braquage des roues avant (2,3) du véhicule ; et
- le gain statique (GS1) de la vitesse de lacet ($\dot{\psi}$) par rapport à la position angulaire du volant.

**10.** Procédé selon la revendication 9, dans lequel on active ladite élaboration de consigne de braquage ($\alpha_r$) des roues arrière (4,5) lorsque au moins un premier paramètre de fonctionnement du véhicule vérifie une condition de seuil respective.

**Claims**

**1.** System for controlling the steering of steered rear wheels on board a motor vehicle (1) having four steered wheels (2, 3, 4, 5), **characterized in that** it comprises generating means (6) for generating a steering setpoint ($\alpha_r$) for the rear wheels (4, 5), reducing the phase shift between the lateral acceleration ($\gamma_t$) of the vehicle (1) and the yaw rate ($\dot{\psi}$) of the vehicle (1), as a function of:

- the longitudinal speed (VL) of the vehicle (1);
- the steering angle ($\alpha_f$) of the front wheels (2, 3) of the vehicle (1); and
- the static gain (GS1) of the yaw rate ($\dot{\psi}$) with respect to the angular position of the steering wheel.

**2.** System according to Claim 1, comprising control means (SC) for activating or deactivating said generating means (6).

**3.** System according to Claim 2, in which said control means (SC) are designed to activate said generating means (6) when at least a first operating parameter of the vehicle (1) verifies a respective threshold condition.

**4.** System according to Claim 3, in which said first parameter or parameters comprises or comprise the longitudinal speed (VL) of the vehicle and/or the angular position of the steering wheel.

**5.** System according to any one of the preceding claims, in which said static gain (GS1) of the yaw rate ($\dot{\psi}$) with respect to the angular position of the steering wheel additionally varies as a function of at least a second operating parameter of the vehicle (1).

**6.** System according to Claim 5, in which said second operating parameter or parameters of the vehicle (1) comprises or comprise the longitudinal speed (VL) of the vehicle (1) and/or the angular position of the steering wheel.

**7.** System according to Claim 1, in which the generating means (6) are designed to generate the steering setpoint ($\alpha_r$) for the rear wheels (4, 5) additionally as a function of the yaw acceleration ($\ddot{\psi}$) of the vehicle (1).

**8.** System according to Claim 1, in which the generating means (6) are designed to generate the steering setpoint ($\alpha_r$) for the rear wheels (4, 5) additionally as a function of the yaw rate ($\dot{\psi}$) of the vehicle.

**9.** Method for controlling the steering of steered rear wheels on board a motor vehicle (1) having four steered wheels (2, 3, 4, 5), **characterized in that** a steering setpoint ($\alpha_r$) for the rear wheels (4, 5) is generated, reducing the phase shift between the lateral acceleration ($\gamma_t$) of the vehicle and the yaw rate ($\dot{\psi}$) of the vehicle, as a function of:

- the longitudinal speed (VL) of the vehicle;
- the steering angle ($\alpha_f$) of the front wheels (2, 3) of the vehicle; and
- the static gain (GS1) of the yaw rate ($\dot{\Psi}$) with respect to the angular position of the steering wheel.

**10.** Method according to Claim 9, in which said generation of the steering setpoint ($\alpha_r$) for the rear wheels (4, 5) is activated when at least a first operating parameter of the vehicle verifies a respective threshold condition.

**Patentansprüche**

**1.** System zur Steuerung des Einschlagens von gelenkten Hinterrädern an Bord eines Kraftfahrzeugs (1) mit vier gelenkten Rädern (2, 3, 4, 5), **dadurch gekennzeichnet, dass** es Erarbeitungsmittel (6) aufweist, um einen Einschlagsollwert ($\alpha_r$) der Hinterräder (4, 5) zu erarbeiten, der die Phasenverzögerung zwischen der seitlichen Beschleunigung ($\gamma_t$) des Fahrzeugs (1) und der Giergeschwindigkeit ($\dot{\psi}$) des Fahrzeugs (1) in Abhängigkeit von:

- der Längsgeschwindigkeit (VL) des Fahrzeugs (1) ;
- dem Einschlagwinkel ($\alpha_f$) der Vorderräder (2, 3) des Fahrzeugs (1); und
- der statischen Verstärkung (GS1) der Giergeschwindigkeit ($\dot{\psi}$) bezüglich der Winkelstellung des Lenkrads

reduziert.

**2.** System nach Anspruch 1, das Steuermittel (SC) aufweist, um die Erarbeitungsmittel (6) zu aktivieren oder zu deaktivieren.

**3.** System nach Anspruch 2, bei dem die Steuermittel (SC) geeignet sind, die Erarbeitungsmittel (6) zu aktivieren, wenn mindestens ein erster Betriebsparameter des Fahrzeugs (1) eine jeweilige Schwellenbedingung erfüllt.

**4.** System nach Anspruch 3, bei dem der oder die ersten Parameter die Längsgeschwindigkeit (VL) des Fahrzeugs und/oder die Winkelstellung des Lenkrads enthalten.

**5.** System nach einem der vorhergehenden Ansprüche, bei dem die statische Verstärkung (GS1) der Giergeschwindigkeit ($\dot{\psi}$) bezüglich der Winkelstellung des Lenkrads außerdem in Abhängigkeit von mindestens einem zweiten Betriebsparameter des Fahrzeugs (1) variiert.

**6.** System nach Anspruch 5, bei dem der oder die zweiten Betriebsparameter des Fahrzeugs (1) die Längsgeschwindigkeit (VL) des Fahrzeugs (1) und/oder die Winkelstellung des Fahrzeugs enthalten.

**7.** System nach Anspruch 1, bei dem die Erarbeitungsmittel (6) geeignet sind, den Einschlagsollwert ($\alpha_r$) der Hinterräder (4, 5) außerdem in Abhängigkeit von der Gierbeschleunigung $(\ddot{\Psi})$ des Fahrzeugs (1) zu erarbeiten.

**8.** System nach Anspruch 1, bei dem die Erarbeitungsmittel (6) geeignet sind, den Einschlagsollwert ($\alpha_r$) der Hinterräder (4, 5) außerdem in Abhängigkeit von der Giergeschwindigkeit ($\dot{\psi}$) des Fahrzeugs zu erarbeiten.

**9.** Verfahren zur Steuerung des Einschlagens von gelenkten Hinterrädern an Bord eines Kraftfahrzeugs (1) mit vier gelenkten Rädern (2, 3, 4, 5), **dadurch gekennzeichnet, dass** ein Einschlagsollwert ($\alpha_r$) der Hinterräder (4, 5) erarbeitet wird, der die Phasenverzögerung zwischen der seitlichen Beschleunigung ($\gamma_t$) des Fahrzeugs (1) und der Giergeschwindigkeit ($\dot{\psi}$) des Fahrzeugs (1) in Abhängigkeit von:

- der Längsgeschwindigkeit (VL) des Fahrzeugs (1) ;
- dem Einschlagwinkel ($\alpha_f$) der Vorderräder (2, 3) des Fahrzeugs (1); und

- der statischen Verstärkung (GS1) der Giergeschwindigkeit ($\dot{\psi}$) bezüglich der Winkelstellung des Lenkrads.

reduziert.

10. Verfahren nach Anspruch 9, bei dem die Erarbeitung eines Einschlagsollwerts ($\alpha_r$) der Hinterräder (4, 5) aktiviert wird, wenn mindestens ein erster Betriebsparameter des Fahrzeugs eine jeweilige Schwellenbedingung erfüllt.

# FIG.1

# FIG.2

# FIG.3

accélération latérale en m/s²

vitesse de lacet $\dot{\Psi}$ en rad/s

Temps (s)

# FIG.4

diminution de $K_2$

$K_2=0,6\ K_{2max}$

$K_2=0,4\ K_{2max}$

$K_1=0,1$

véhicule passif

Phase (degré)

Fréquence (Hz)

# FIG.5

accélération latérale en m/s²
vitesse de lacet $\dot{\Psi}$ en rad/s

Temps (s)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4947326 A

- GB 2252538 A, Honda